# EUROPEAN PATENT SPECIFICATION

(11) **EP 2 582 646 B1**
(45) Date of publication and mention of the grant of the patent: **21.12.2016**
(21) Application number: 11729148.4
(22) Date of filing: 17.06.2011
(51) Int. Cl.: C05F 11/02, B09C 1/00

(54) **METHOD OF RESTORING CONTAMINATED LAND**
VERFAHREN ZUR SANIERUNG VON KONTAMINIERTEM BODEN
PROCÉDÉ POUR RÉGÉNÉRER UN SOL POLLUÉ

(30) Priority: 17.06.2010 GB 201010189
(43) Date of publication of application: 24.04.2013
(73) Proprietor: Lichen Properties Limited, Maidenhead, Berkshire SL6 3YS (GB)
(72) Inventor: RICHARDS, Quinton Clive, Sussex TN6 3QF (GB)
(74) Representative: Games, Robert Harland
(86) International application number: PCT/GB2011/051132
(87) International publication number: WO 2011/158036

(56) References cited:
- EP-A2- 1 116 526
- WO-A1-2009/021528
- WO-A1-2009/138746
- WO-A2-2009/149944
- AU-A4- 2009 101 249
- DE-U1- 29 807 878
- DATABASE WPI Week 198333 Thomson Scientific, London, GB; AN 1983-739190 XP000002659118, & SU 962 445 A (ROAD RES INST) 30 September 1982 (1982-09-30)

## Description

The present invention relates to a method of restoring contaminated land, particularly landfill sites.

### BACKGROUND TO THE INVENTION

At present, the availability of contaminated land for re-use, such as for new buildings, roads, domestic and commercial orchards, vineyards, gardens and sports pitches, is very limited, because the contamination can be potentially toxic for many years, thereby posing a serious health and safety risk. Furthermore, the contamination may prevent or limit plant growth.

At former landfill sites, depending on the age of the site and the type of buried waste, the waste typically produces one or more gases as by-products of natural degradation. Such gases, in particular, the so-called 'greenhouse gases' such as methane and carbon dioxide are harmful to the environment.

Furthermore, as rain water percolates through the landfill, the water is contaminated by decomposing waste and forms a leachate. This leachate typically enters the local water table, polluting the local environment and potentially putting the health and safety of the local population at risk. Additional leachate is generally produced during the decomposition of carbonaceous material.

To mitigate these problems, it is known to produce engineered landfill sites, that are either built on geographically impermeable materials or that use an impermeable liner made of geotextiles or engineered clay. The use of such linings is now mandatory in certain countries, depending on the nature of the contamination. However, many landfill sites already in existence do not benefit from such linings. Furthermore, attempts to cap landfill sites with clay to try and prevent water ingress are often unsuccessful, because over time, the clay dries out and cracks, thereby allowing the ingress of rain water. DE 29807878 U1 discloses a method for sealing a landfill site using layers of different materials and/or additives, to prevent water entering the landfill. WO 2009/021528 discloses a method for the production of stable humus- and nutrient-rich and water-storing soil substrates with properties of anthropogenic soil types (Terra Preta), where pyrogenic carbon, organic biomass, and/or natural mineral materials are used as initial materials in a fermentation process.

It is therefore an object of the invention to provide an improved method of restoring contaminated land such as landfill to beneficial use, the method reducing leachate into the water table and gas emission to atmosphere.

### STATEMENT OF INVENTION

According to the present invention there is provided a method of restoring a landfill site comprising covering the surface of the landfill site with a substantially uninterrupted layer of a composition including pulverised fly ash mixed with lime, the layer creating a pozzolanic pan, tapping the pozzolanic pan to extract methane gas from said landfill site, and laying at least one soil horizon over the pozzolanic pan, characterised by, prior to covering the surface of the landfill site, grading the surface of the landfill site in one or more slopes for the resultant pozzolanic pan to slope, and pyrolysing biomass using said methane gas extracted from said landfill site to produce biochar, and forming part of the at least one soil horizon from said biochar.

The method is advantageous because it provides environmental improvements to contaminated land so that it can be reclaimed for subsequent economically valuable use, such as growing high value crops, for example a commercial vineyard and/or integrated recreational and educational facilities.

The pozzolanic pan effectively caps the site from upward migration of gases, which may be tapped using bore holes. The capping also provides a barrier against the ingress of rain and hence significantly reduces leachates entering the water table from the contaminated land, for example landfill.

The pozzolanic pan facilitates the harvesting or tapping of the waste gases for subsequent use, for example, in the pyrolysis of biomass. Before the composition is laid, the site is landscaped to provide slopes. In use, these slopes direct any rainwater away from the site into lagoons, from where the water can be piped for use.

The method is environmentally friendly as it minimises the use of recovered materials that would otherwise have to be disposed of Pulverised fly ash is a waste by-product of coal fire stations.

One or more soil horizons are laid over the preparation layer. These engineered soil horizons may be adapted for specific end users of the reclaimed contaminated land. For example, the composition of the layers may be manipulated to balance adequate drainage with a good water holding capacity, making the contaminated land particularly conducive for use in agriculture.

The layers may also be adapted to provide adequate aeration of the vine root system, which is essential to avoid root asphyxiation, a problem that commonly occurs in badly compacted soils.

Since each of the layers is not a hard pan, they are not barriers to root penetration.

Use of biochar is environmentally friendly because it stores carbon, hence reducing carbon dioxide emissions.

Preferable and/or optional features of the invention are set forth in claims 2 to 15.

### DESCRIPTION OF DRAWINGS

For a better understanding of the present invention, and to show more clearly how it may be carried into effect, reference will now be made, by way of example only, to the accompanying drawing, in which:

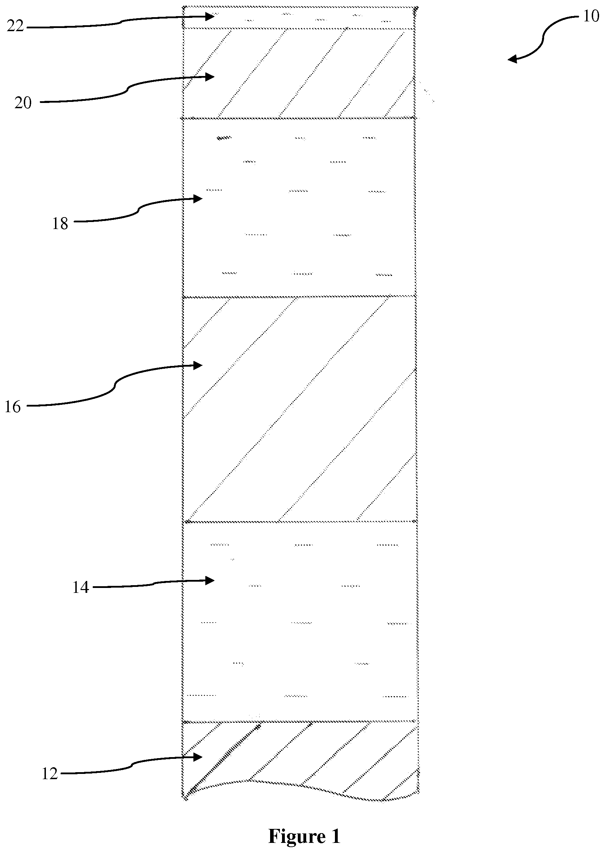

Figure 1 shows a schematic cross-section of a landfill cap having a pozzolanic layer and a series of engineered soil horizons.

### DESCRIPTION OF PREFERRED EMBODIMENT(S)

Referring to Figure 1, a section through a capped landfill site is indicated generally at 10. The landfill site 10 includes a deposit of waste material or landfill 12 that has typically been collected from the local municipality and transported to the landfill site for long term storage. This waste material 12 essentially contaminates the land as previously described unless treated, for example in a manner as described below.

A pozzolanic layer or hard pan 14 is laid above the waste material 12. This pozzolanic layer is composed of pulverised fly ash (PFA) mixed with lime. PFA is a waste product of coal fired power stations. PFA distributed in the presence of free lime forms creates a hard impermeable pozzolanic pan over time. The hard pan effectively caps the waste material 12, preventing gases, such as methane and carbon dioxide, produced as by-products of bio-degradation from rising to the surface. It also provides a barrier to ingress of rainwater and/or groundwater. The pozzolanic layer is around 1m to 1.5m in thickness.

Although not shown in Figure 1, the surface of the landfill is graded in one or more slopes such that the resulting pozzolanic layer 14 slopes. In this way, the by-product gases and liquids are directed to suitable collection points. The gas is tapped and used as an energy source for the pyrolysis of biomass. The water may be collected in a lagoon. In the context of grapevine growing, the grading of the site is carried out in such a way that it creates a slope that optimises insolation, to produce the greatest volume of grape harvest and capture of water for irrigation.

A series of engineered soil horizons, each having a particular composition, are then laid on top of the pozzolanic layer 14. The creation of a set of soil horizons above the hard cap enables the site to be brought into more beneficial uses such as agricultural production and recreational purposes consistent with current environmental health and safety requirements.

A first soil horizon 16, a "C" horizon, is laid directly on top of the pozzolanic layer 14, and is a composition of PFA and biochar. The role of the biochar is to help balance drainage within the soil layer with the capacity of the PFA to hold water whereas the PFA helps to prevent nutrient leaching. The C soil horizon 16 acts as a foundation layer and may also typically contain large stones and/or crushed brick, preferably recycled. The layer 14 is around 1.5m thick and is situated at a depth between 2 and 3.5m from the completed site surface.

The biochar is pyrolysed using methane tapped through the pozzolanic layer 14. Advantageously, the biochar can be slowly pyrolysed at low temperatures and incubated for 2 months, the effective pH being lowered to an average of pH 2-3 which neutralises the high pH values encountered from untreated PFA. Where the pH remains higher and free boron remains elevated, the soil is nonetheless suitable for the growing of Vinus vitecultera (the common grape vine) which is boron and pH tolerant. The pyrolysis of biochar sequestrates carbon in a stable format, the residence time of which is in excess of 1000 years. This therefore contributes to environmental aims of greenhouse gas emission reduction.

A second soil horizon 18, horizon "B", is laid over the first soil horizon 16, and it is also primarily a blend of PFA and biochar. By way of example, the composition of the second soil horizon 18 may be 60% PFA to 40% biochar by volume. However, the second soil horizon 18 may also include stone, sand, silt and organic matter, such as secondary treated sewage sludge, known as cake. The sewage sludge is an active NPK (Nitrogen Phospohorus Potassium) fertiliser and supplies organic matter to the soil. The amount of organic matter within the second soil horizon 18 is less than 1% by volume. The second soil horizon 18 is around 1.5m in thickness and is situated at a depth of around 0.5m and 2.0m from the completed site surface.

A third soil horizon 20, horizon "A", is laid on top of the second soil horizon 18 and is also a mixture of PFA and biochar in the proportions of 57% PFA and 40% biochar by volume. Less than 3% by volume of the blend is organic matter provided by secondary treated sewage sludge. The majority of mineral nutrients will be held in this horizon. The third soil horizon is around 0.4m in thickness and is situated at around 0.1m to 0.5m from the completed site surface.

A fourth soil horizon 22, horizon "O", is located at the completed site surface, and is typically 0.1m deep. It also contains a blend of PFA and biochar, with there being approximately 45% biochar and 25% PFA by volume. The fourth soil horizon 22 contains a higher proportion of organic matter than the other soil horizons, at around 30% by volume, for example secondary treated sewage sludge, and has a relatively low mineral content.

The presence of biochar throughout the soil horizons engenders free draining characteristics and its inherent adsorptive retentive characteristics allow the nutrient elements from the organic sewage sludge to be made available for an optimised growing medium.

The use of engineered soil horizons facilitates good soil drainage which is desirable for crop cultivation because it encourages the soil to warm up quickly. It is well established in gardening that waterlogged soil warms up more slowly that drier soil. Warmer soils are generally beneficial as they stimulate root activity and consequently shoot growth in the Spring.

In brief, the artificial soil duplicates the natural soil characteristics of a silty clay loam by replacing inert fine particle materials such as silt and clay with PFA and large particles such as sand and gravel with biochar. The artificial soil is an enhanced growing medium for crops and an additional surface upon which recreation can take place safely having regard to current health and safety legislation.

It will be understood that the depth or thickness of the various soil horizons can be varied to suit particular landfill or contaminated land sites. Furthermore, the composition of the various soil horizons may also be varied to suit a particular location. The soil horizons described may be used in isolation or in any combination with the pozzolanic layer.

## Claims

1. A method of restoring a landfill site (12) comprising covering the surface of the landfill site (12) with a substantially uninterrupted layer of a composition including pulverised fly ash mixed with lime, the layer creating a pozzolanic pan (14), tapping the pozzolanic pan (14) to extract methane gas from said landfill site (12), and laying at least one soil horizon (16) over the pozzolanic pan (14), **characterised by** prior to covering the surface of the landfill site (12), grading the surface of the landfill site (12) in one or more slopes for the resultant pozzolanic pan (14) to slope, and
pyrolysing biomass using said methane gas extracted from said landfill site (12) to produce biochar, and forming part of the at least one soil horizon (16) from said biochar.

2. A method as claimed in claim 1, **characterised in that** the thickness of the layer creating the pozzolanic pan (14) is around 1.5 m and the thickness of the first soil horizon (16) laid over the pozzolanic pan (14) is around 1.5m.

3. A method as claimed in claim 1 or claim 2, **characterised in that** a plurality of soil horizons (16, 18, 20, 22) is laid over the pozzolanic pan (14), each having a separate composition.

4. A method as claimed in any one of claims 1 to 3, **characterised in that** each soil horizon (16, 18, 20, 22) has a composition including pulverised fly ash mixed with biochar.

5. A method as claimed in any one of claims 1 to 4, **characterised in that** each soil horizon (16, 18, 20, 22) includes stone and/or sand and/or silt.

6. A method as claimed in any one of claims 1 to 5, **characterised in that** the composition of the first soil horizon (16) includes stone and/or crushed brick.

7. A method as claimed in any preceding claim, **characterised in that** the composition of a second soil horizon (18) laid over the first soil horizon (16) includes less than 1% organic matter by volume.

8. A method as claimed in claim 7, **characterised in that** the composition of the second soil horizon (18) includes around 60% pulverised fuel ash and around 40% biochar by volume.

9. A method as claimed in claim 7 or claim 8, **characterised in that** the thickness of a second soil horizon (18) laid over the first soil horizon (16) is around 1.5m.

10. A method as claimed in any one of claims 7 to 9, **characterised in that** the composition of a third soil horizon (20) includes less than 3% organic matter by volume.

11. A method as claimed in claim 10, **characterised in that** the composition of the third soil horizon (20) includes around 57% pulverised fuel ash and around 40% biochar by volume.

12. A method as claimed in any one of claims 10 or 11, **characterised in that** the composition of a fourth soil horizon (22) includes around 30% organic matter by volume.

13. A method as claimed in claim 12, **characterised in that** the composition of the fourth soil horizon (22) includes around 25% pulverised fuel ash and around 45% biochar by volume.

14. A method as claimed in claim 12 or 13, **characterised in that** the thickness of the third soil horizon (20) laid over the second soil horizon (18) is around 0.4m, and the thickness of a fourth soil horizon (22) laid over the third soil horizon (20) is up to around 0.1m.

15. A method as claimed in claim 1, **characterised in that** the composition of at least a second soil (18) horizon laid over the pozzolanic pan (14) includes a portion of sewage sludge.

## Patentansprüche

1. Verfahren zur Wiederherstellung eines Deponiegeländes (12), umfasst das Bedecken der Oberfläche der Deponie (12) mit einer im wesentlichen ununterbrochenen Schicht mit einer Zusammensetzung, die pulverisierte Flugasche vermischt mit Kalk enthält, welche eine puzzolanische Senke (14) bildet, das Erschließen der puzzolanischen Senke (14) für die Extraktion von Methangas aus der Deponie (12), und das Auftragen mindestens eines Bodenhorizonts (16) über die puzzolanische Senke (14), **dadurch gekennzeichnet, dass**
vor der Bedeckung der Oberfläche der Deponie (12), die Oberfläche der Deponie (12) in eine oder mehrere Böschungen für die Neigung der resultierenden puzzolanische Senke (14) eingeteilt wird, und
Biomasse mit dem aus der Deponie extrahierten Methangas (12) zur Produktion von Biokohle pyrolisiert wird, die einen Teil mindestens eines Bodenhorizonts (16) aus der Biokohle bildet.

2. Verfahren nach Anspruch 1, **dadurch gekennzeichnet, dass** die Dicke der Schicht, die die puzzolanische Senke bildet (14) etwa 1,5 m beträgt und die Dicke des ersten Bodenhorizonts (16), der über die puzzolanische Senke gelegt wird etwa 1,5 m beträgt.

3. Verfahren nach Anspruch 1 oder Anspruch 2, **dadurch gekennzeichnet, dass** mehrere Bodenschichten (16, 18, 20, 22) über die puzzolanische Senke gelegt werden (14), wobei jede eine eigene Zusammensetzung hat.

4. Verfahren nach einem der Ansprüche 1 bis 3, **dadurch gekennzeichnet, dass** jeder Bodenhorizont (16, 18, 20, 22) eine Zusammensetzung hat, die pulverisierte Flugasche gemischt mit Biokohle umfasst.

5. Verfahren nach einem der Ansprüche 1 bis 4, **dadurch gekennzeichnet, dass** jeder Bodenhorizont (16, 18, 20, 22) Stein und / oder Sand und / oder Schluff enthält.

6. Verfahren nach einem der Ansprüche 1 bis 5, **dadurch gekennzeichnet, dass** die Zusammensetzung des ersten Bodenhorizonts (16) Stein und / oder Ziegelsplitt umfasst.

7. Verfahren nach einem der vorhergehenden Ansprüche, **dadurch gekennzeichnet, dass** die Zusammensetzung eines zweiten Bodenhorizonts (18), der über den ersten Bodenhorizont gelegt (16) wird, weniger als 1 Vol.-% organische Materie umfasst.

8. Verfahren nach Anspruch 7, **dadurch gekennzeichnet, dass** die Zusammensetzung des zweiten Bodenhorizonts (18) etwa 60 Vol.-% pulverisierte Brennstoffasche und etwa 40 Vol.-% Biokohle umfasst.

9. Verfahren nach Anspruch 7 oder Anspruch 8, **dadurch gekennzeichnet, dass** die Dicke eines zweiten Bodenhorizonts (18), der über den ersten Bodenhorizont (16) gelegt wird, etwa 1,5 m beträgt.

10. Verfahren nach einem der Ansprüche 7 bis 9, **dadurch gekennzeichnet, dass** die Zusammensetzung eines dritten Bodenhorizonts (20) weniger als 3 Vol.-% organische Substanz umfasst.

11. Verfahren nach Anspruch 10, **dadurch gekennzeichnet, dass** die Zusammensetzung des dritten Bodenhorizonts (20) etwa 57 Vol.-% pulverisierter Brennstoffasche und etwa 40 Vol.-% Biokohle umfasst.

12. Verfahren nach einem der Ansprüche 10 oder 11, **dadurch gekennzeichnet, dass** die Zusammensetzung eines vierten Bodenhorizonts (22) etwa 30 Vol.-% organische Materie umfasst.

13. Verfahren nach Anspruch 12, **dadurch gekennzeichnet, dass** die Zusammensetzung des vierten Bodenhorizonts (22) etwa 25 Vol.-% pulverisierte Brennstoffasche und etwa 45 Vol.-% Biokohle umfasst.

14. Verfahren nach Anspruch 12 oder 13, **dadurch gekennzeichnet, dass** die Dicke des dritten Bodenhorizonts (20), der über den zweiten Bodenhorizont (18) gelegt wird, etwa 0,4 m beträgt und die Dicke eines vierten Bodenhorizonts (22), der über den dritten Bodenhorizont (20) gelegt wird, bis zu etwa 0,1 m hoch ist.

15. Verfahren nach Anspruch 1, **dadurch gekennzeichnet, dass** die Zusammensetzung von mindestens eines zweiten Bodenhorizonts (18), der über die puzzolanische Senke (14) gelegt wird, einen Anteil Klärschlamm umfasst.

## Revendications

1. Méthode de régénération d'une décharge (12) consistant à recouvrir la surface de la décharge (12) avec une couche substantiellement ininterrompue d'une composition comprenant des cendres volantes pulvérisées mélangées avec de la chaux, la couche créant une cuve pouzzolanique (14), à percer la cuve pouzzolanique (14) pour extraire le gaz méthane de ladite décharge (12), et à poser au moins un horizon de sol (16) au-dessus de la cuve pouzzolanique (14), **caractérisée en ce que**
préalablement au revêtement de la surface de la décharge (12), on procède à la mise à niveau de la surface de la décharge (12), avec une ou plusieurs pentes pour donner une pente à la cuve pouzzolanique (14) résultante, et
à la pyrolyse de la biomasse en utilisant ledit gaz méthane extrait de ladite décharge (12) pour produire du biochar, et à la formation, à partir dudit biochar, de l'horizon de sol (16) au nombre d'au moins un.

2. Méthode selon la revendication 1, **caractérisée en ce que** la couche créant la cuve pouzzolanique (14) mesure environ 1,5 m d'épaisseur, et le premier horizon de sol (16) posé au-dessus de la cuve pouzzolanique (14) mesure environ 1,5 m d'épaisseur.

3. Méthode selon la revendication 1 ou la revendication 2, **caractérisée par** la pose d'une pluralité d'horizons de sol (16, 18, 20, 22) au-dessus de la cuve pouzzolanique (14), chacun ayant une composition distincte.

4. Méthode selon une quelconque des revendications 1 à 3, **caractérisée en ce que** la composition de chaque horizon de sol (16, 18, 20, 22) comprend des cendres volantes pulvérisées mélangés avec du biochar.

5. Méthode selon une quelconque des revendications 1 à 4, **caractérisée en ce que** chaque horizon de sol (16, 18, 20, 22) comprend de la pierre et/ou du sable et/ou du silt.

6. Méthode selon une quelconque des revendications 1 à 5, **caractérisée en ce que** la composition du premier horizon de sol (16) comprend de la pierre et/ou de la brique pilée.

7. Méthode selon une quelconque des revendications précédentes, **caractérisée en ce que** la composition d'un deuxième horizon de sol (18) posé au-dessus du premier horizon de sol (16) comprend une proportion de matières organiques inférieure à 1% par volume.

8. Méthode selon la revendication 7, **caractérisée en ce que** la composition du deuxième horizon de sol (18) comprend environ 60% de cendres de combustible pulvérisées et environ 40% de biochar, par volume.

9. Méthode selon la revendication 7 ou la revendication 8, **caractérisée en ce que** le deuxième horizon de sol (18) posé au-dessus du premier horizon de sol (16) mesure environ 1,5 m d'épaisseur.

10. Méthode selon une quelconque des revendications 7 à 9, **caractérisée en ce que** la composition d'un troisième horizon de sol (20) comprend moins de 3% de matières organiques par volume.

11. Méthode selon la revendication 10, **caractérisée en ce que** la composition du troisième horizon de sol (20) comprend environ 57% de cendres volantes pulvérisées et environ 40% de biochar, par volume.

12. Méthode selon une quelconque des revendications 10 ou 11, **caractérisée en ce que** la composition d'un quatrième horizon de sol (22) comprend environ 30% de matières organiques par volume.

13. Méthode selon la revendication 12, **caractérisée en ce que** la composition du quatrième horizon de sol (22) comprend environ 25% de cendres volantes pulvérisées et environ 45% de biochar, par volume.

14. Méthode selon la revendication 12 ou 13, **caractérisée en ce que** le troisième horizon de sol (20) posé au-dessus du deuxième horizon de sol (18) mesure environ 0,4 m d'épaisseur, et un quatrième horizon de sol (22) posé au-dessus du troisième horizon de sol (20) mesure jusqu'à environ 0,1 m d'épaisseur.

15. Méthode selon la revendication 1, **caractérisée en ce que** la composition d'au moins un deuxième horizon de sol (18) posé au-dessus de la cuve pouzzolanique (14) comprend une partie de boues d'épuration.
